(19) **Europäisches Patentamt**

**European Patent Office**

**Office européen des brevets**

(11) **EP 1 521 378 B1**

(12) **EUROPEAN PATENT SPECIFICATION**

(45) Date of publication and mention
of the grant of the patent:
**08.06.2005 Bulletin 2005/23**

(51) Int Cl.$^7$: **H04B 1/40**, H04B 17/00

(21) Application number: **03022324.2**

(22) Date of filing: **04.10.2003**

(54) **Method of analysing a receiver and /or transmitter chain**

Verfahren zur Analyse von eines Sende- und/oder Empfangskette

Procédé pour l'analyse d'une chaîne de réception et/ou transmission

(84) Designated Contracting States:
**DE FI FR GB SE**
Designated Extension States:
**AL LT LV MK**

(43) Date of publication of application:
**06.04.2005 Bulletin 2005/14**

(73) Proprietor: **Lucent Technologies Network
Systems GmbH
90411 Nürnberg (DE)**

(72) Inventor: **Fischer, George, Dr.
90419 Nürnberg (DE)**

(74) Representative: **Sarup, David Alexander
Lucent Technologies NS UK Limted,
5 Mornington Road
Woodford Green, Essex IG8 OTU (GB)**

(56) References cited:
• **RAEL J ET AL: "Design methodology used in a
single-chip CMOS 900 MHz spread-spectrum
wireless transceiver" DESIGN AUTOMATION
CONFERENCE, 1998. PROCEEDINGS SAN
FRANCISCO, CA, USA 15-19 JUNE 1998, NEW
YORK, NY, USA,IEEE, US, 15 June 1998
(1998-06-15), pages 44-49, XP010309285 ISBN:
0-89791-964-5**

**Description**

<u>Specification</u>

<u>Field of the invention</u>

The invention is related to a method of analysing a receiver and/or transmitter design for communication systems and to an apparatus adapted to perform said method.

<u>Background of the invention</u>

Today, comparisons of different approaches for transmitter and/or receiver architectures are mainly done based on circuit diagrams. In this regard, typically a list of all essential components is necessary based on which a complexity and/or cost estimation is performed. However, even less relevant components like resistors typically have to be included within such a list through empirical numbers if a circuit diagram does not provide that level of detail.
As a consequence, a main problem of today's solution for complexity and cost assessment, in particular with regard to the provision of receiver and/or transmitter chains, is that a circuit diagram is needed and the essential components have to be known. Therefore a rough circuit design has to be performed before one is able to give estimates for complexity and/or cost involved therewith.

<u>Summary of the invention</u>

An object of the invention is therefore to provide with regard to the above discussed state of the art a new and improved approach to avoid or at least ameliorate the above disadvantages and in particular to ensure a quick assessment of complexity and prediction of associated costs, preferably by enabling at an early step of planning or production of receivers and/or transmitters for use in a mobile radio communication system comparisons of complexity and predictable costs just based on block diagrams without the need for detailed circuit diagrams and bills of material or components.
The inventive solution is surprisingly achieved by subject matter of the independent claims.
Advantageous and/or preferred embodiments or refinements are the subject matter of respective dependent claims.
Accordingly the invention proposes to analyse a receiver and/or transmitter chain intended or adapted to be used for a communication system, in particular for a mobile radio system, especially based on a GSM, UMTS or CDMA2000 standard, by determining an information overhead factor at at least one stage, preferably at each stage of a signal processing chain within said receiver and/or transmitter architecture.
Thus, by immediately quantifying the signal processing overhead at any intended or necessary processing stage the invention covers a methodology to assess the complexity and cost of signal chains for transmitters and receivers. It allows comparison of different transmitter and receiver architectures on a very high abstraction level without needing to do the real circuit design. Cost estimates can be derived based on high level analysis without having to generate a bill of material. Also symmetries between receiver (RX) and transmitter (TX) design can be exploited.
To put the invention into practice, it is proposed to define at an air interface the respective information overhead factor as being infinity, and to define at the input of a transmitter chain the respective information overhead factor as being one and/or to define at the output of a receiver chain the respective information overhead factor as being one.
Thus, the invention preferably is based on the assumption that a receiver chain at a high level does a stepwise reduction of information to the fundamental information contained and a transmitter chain at a high level does a stepwise increase of information to the fundamental information contained. As a result, non-optimal signal chain design becomes immediately obvious if the overhead factor does not show a monotonous decrease with receivers or increase with transmitters.
Moreover by applying the invention to a digital domain as well as to an analogue domain of the receiver and/or transmitter chain, it becomes immediately visible whether a TX or RX does most of its signal processing in analogue or digital domain and interactions between the digital section and analogue section, e.g. by gain ranging stages, are well covered by the overhead factor. Savings with such interactions become immediately visible.
According to preferred refinements, the information overhead factor is determined as the ratio between the respective possible amount of information at a specific stage and the bit rate at the output of the receiver chain or at the input of the transmitter chain, in particular with the bit rate being defined as the data rate of a given service. Based thereon, a quick overview over an RF architecture may be easily transferred into one single diagram with such diagram providing a very compressed portrait of the architecture.
The respective determined overhead factors can be translated into cost figures and be used for cost projections, for example by calculating the respective possible amount of information at a specific stage on the basis of pre-given characteristics of the respective chain component at said stage.

It has been shown, that the application of the Shannon bound formula not only applied to channels but at least to the analogue stages within receivers and transmitters is enabling an easy calculation of the possible amount of information.

Deriving there from, a signal processing overhead factor can be derived that is applicable for the analogue domain as well for the digital one, preferably by using within an analogue domain the step of calculating a respective capacity C based on the Shannon bound formula $C = B * ld (1+S/N)$, with B representing a respective bandwidth, ld representing the base two logarithm and S/N representing a respective signal to noise ratio at said stage and/or within a digital domain the step of calculating a respective information stream R based on the formula $R = S * n_B * n_{SB}$, with S representing a respective sample rate, $n_B$ representing the resolution or number of bits and $n_{SB}$ representing the number of signal branches.

Correspondingly, a preferred apparatus for analyzing a receiver and/or transmitter chain intended or adapted to be used for a communication system, in particular for a mobile radio system, especially based on a GSM, UMTS or CDMA2000 standard, in particular for performing the afore discussed approach, comprises a calculator for determining an information overhead factor at each stage of a signal processing stage based on pre-given characteristics of the respective chain component at a specific stage. A preferred calculator is adapted for determining the ratio between the respective possible amount of information at a specific stage and the bit rate at the output of the receiver chain or at the input of the transmitter chain.

Especially for a simple implementation of the inventive approach, the invention is further proposing a data medium with computer readable data stored thereon, wherein the data when read by a computer is interacting with the computer to perform a method of any of the preceding claims.

The invention is exemplary described in more detail with regard to preferred embodiments hereinafter and by referencing the attached drawings.

Brief description of the drawings

It is shown in

Fig. 1:    a diagram identifying the overhead factor versus signal processing stage number of an RX-chain,
Fig. 2:    a block diagram of a corresponding RX-chain based on a direct mixing receiver architecture,
Fig. 3:    a block diagram of a TX-chain based on a single conversion transmitter architecture, and
Fig. 4:    a diagram sketching the flow of information with a transmission chain.

Detailed description of the invention

It is mentioned, that the subsequent description is mainly concerned with the analysis of an exemplary receiving chain, such as of a base station of a mobile radio communication system. In this regard, as aforementioned the inventive approach is based on the fact that a receiver chain at a high level of abstraction does a stepwise reduction of information to the fundamental information contained.

However, for the analysis of a transmitter chain the described approach in principle can be similarly applied vice versa.

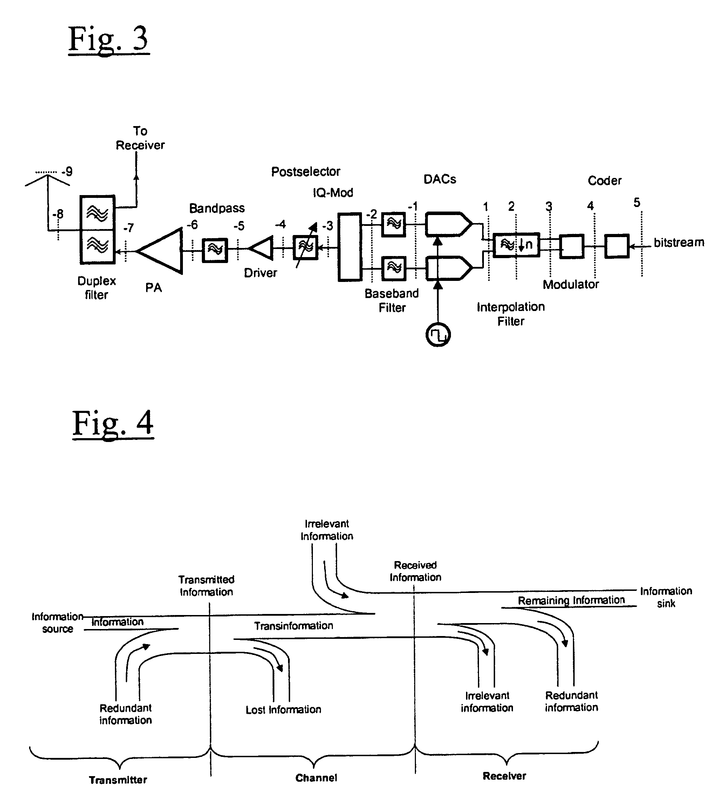

Fig. 4 depicts the flow of information with a transmission chain as known from literature. The information given by the source is appended with redundancy to make the transmission robust against distortions occurring at the channel. At the channel in a general sense some information gets lost and can not be reconstructed at the receiver. This is called lost information. What remains from the original information after some information is lost is called Transinformation. A receiver at the end of the transmission chain can not do better than recovering the Transinformation. It is impossible for the receiver to recover the original information because some information gets lost on the channel. Moreover, due to noise and interference on a channel some information gets added, that is not related to the original information given by the source. It is therefore called irrelevant information.

The task of a receiver now is to take out irrelevant and redundant information and reconstruct the Transinformation. The basic step of analysing now for the applying of the methodology invented is to determine an "information overhead factor" at each stage of the signal processing chain. At the air interface of a receiver the overhead factor is infinity as the bandwidth and dynamic range is unlimited.

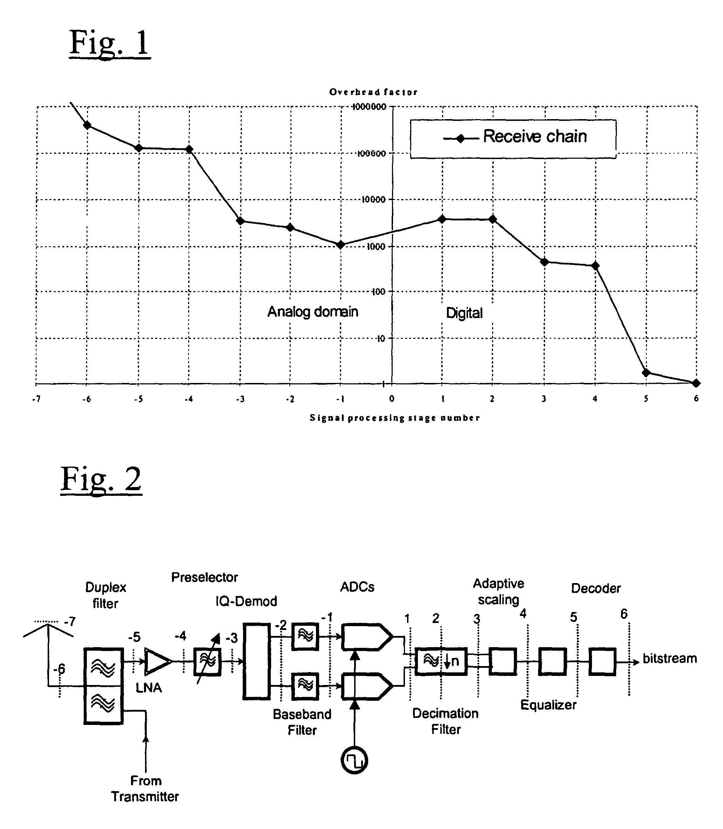

This can be seen from Fig. 1, at the processing stage -7 based on Fig. 2. On the opposite side of the receiver at its output after reconstruction of information the overhead factor is 1 by definition. According to Fig. 1, this receiver output stage is depicted at processing stage 6 based on Fig. 2.

According to very useful refinements, it is now essential that the calculator for the determination of overhead factor is not restricted to the digital domain solely but is additionally applicable to the analogue domain. The basic formula for calculating the possible amount of information, i.e. capacity C with regard to the analogue domain first, at each node of the signal processing chain, is given by the Shannon bound:

$$C = B \cdot ld\left(1 + \frac{S}{N}\right) \qquad (1)$$

In this formula B equals the bandwidth and S/N the signal to noise ratio. ld reflects the logarithmus dualis, which is a logarithm to the base of two. Accordingly, the Shannon bound formula (1) based on Signal to noise ratio SNR in dB can be given as

$$C = B \cdot ld\left(1 + \frac{S}{N}\right) = B \cdot ld\left(1 + 10^{SNR_{dB}/10}\right) \qquad (2)$$

Now the overhead factor $O_i$ at each stage of the signal chain can be derived as the ratio between $C_i$ at each stage and the bit rate at the output of the receiver, which typically essentially maps the data rate of the service $r_{Service}$. Using this assumption a formula for ascertaining the overhead factor $O_i$ is

$$O_i = \frac{C_i}{r_{Service}} \qquad (3)$$

In the following an example in the context of a GSM (Global System for Mobile communication) receiver is given for simplicity reasons. However the methodology according to the invention can be applied to any other communication standard like e.g. UMTS or CDMA2000.

Looking at Fig. 2 it is obvious that there is no bandwidth limitation at the air interface, therefore $C_{-7}$ and thus also the overhead factor $O_{-7}$ equal infinity.

At stage -6, i.e. the output of the antenna, there is a bandwidth limitation to 880 to 960 MHz, the entire GSM900 band. Thus the bandwidth is 80 MHz. Furthermore there is also a dynamic range limitation. The antenna can not withstand infinite power.

Typically antennas are limited to 1000W or equally 60 dBm. Now considering that the fundamental Boltzmann noise in 200 kHz GSM channel bandwidth equals -121 dBm, a dynamic range of 181 dB is supported after the antenna. Furthermore assuming that the service rate equals 12,2 kbit/s, $O_{-6}$ can be calculated according to:

$$C_{-6} = B \cdot ld(1 + 10^{SNR_{dB}/10}) = 80\,MHz \cdot ld(1 + 10^{181/10}) = 4.8\,Gbit/s$$

As a result, the overhead factor now equals:

$$O_{-6} = \frac{C_2}{r_{Service}} = \frac{4,8\,Gbit/s}{12.2\,kbit/s} \approx 393000$$

At stage -5 there of Fig. 1 and 2 is a further bandwidth limitation by the duplexer to the whole receive band of 880 to 915 MHz, which equals 35 MHz bandwidth. Furthermore the receive signal port of the duplexer is designed for max +10 dBm. Given those facts the dynamic range max supported goes down from 181 dB to 10-(-121)=131 dB. Furthermore the bandwidth goes down from 80 to 35 MHz. $O_{-5}$ now can be derived as:

$$O_{-5} = \frac{C_{-5}}{r_{Service}} = \frac{35\,MHz \cdot ld(1 + 10^{131/10})}{12.2\,kbit/s} \approx 125000$$

The LNA between stage -5 and -4 of Fig. 2 raises the noise floor and degrades the SNR by typically 3 dB.

Now $O_{-4}$ equals:

$$O_{-4} = \frac{C_{-4}}{r_{Service}} = \frac{35\,MHz \cdot ld(1+10^{128/10})}{12.2\,kbit/s} \approx 122000$$

After point -4 there is a preselector in the signal receiving chain, which limits the bandwidth to 1 MHz.
Accordingly at the stage 3 $O_{-3}$ equals:

$$O_{-3} = \frac{C_{-3}}{r_{Service}} = \frac{1\,MHz \cdot ld(1+10^{128/10})}{12.2\,kbit/s} \approx 3500$$

The IQ demodulator has relaxed linearity and dynamic range requirements as the preselector takes out blockers, therefore the dynamic range is reduced to 92 dB.
This is based on the assumption, that referred to the antenna connector due to the noise figure of 3 dB by the receiver the noise floor referenced to the antenna connector is at -121 dBm+3 dB=118 dBm. As the strongest wanted signal referenced to the antenna connector equals -26 dBm with the nominal error rate test specified, the dynamic range needed at this stage reduces to -26 dBm - [-118 dBm]=92 dB.
At the output of the IQ modulator the following overhead factor $O_{-2}$ can be derived for the complex combined signal according to:

$$O_{-2} = \frac{C_{-2}}{r_{Service}} = \frac{1\,MHz \cdot ld(1+10^{92/10})}{12.2\,kbit/s} \approx 2505$$

The analogue baseband filters at the IQ branches furthermore limit bandwidth. The signal of interest is located between -100 and +100 kHz, whereas the baseband filters have a low pass characteristic with corner frequency of 200 kHz. Their effective bandwidth is 400 kHz. Accordingly at the stage 3 $O_{-1}$ equals:

$$O_{-1} = \frac{C_{-1}}{r_{Service}} = \frac{400\,kHz \cdot ld(1+10^{92/10})}{12.2\,kbit/s} \approx 1002$$

With the analogue to digital converters (ADCs) now there is the transition to digital domain and the overhead factor must be derived in a different way. The information stream $R_1$ out of the ADCs equals the sample rate times the number of bits i.e. the resolution and times 2 for the I and Q branch.
The ADCs typically would run at 2.2 MSa/s and have 10 bit, therefore $O_1$ equals:

$$O_1 = \frac{R_1}{r_{Service}} = \frac{2.2\,MSa/s \cdot 10\,bit/Sample \cdot 2}{12.2\,kbit/s} \approx 3606$$

Thus, a strange thing might be happened. The overhead factor increased from one stage to the next. It is immediately obvious that irrelevant information is added to the signal. So this is not an optimal selection of ADC parameters. However the next stage tries to reduce information again. A slight raise with ADCs however, usually has to be tolerated as the quantisation noise floor is typically placed 15 dB below the thermal noise floor.
The decimation filter first does a limitation to 200 KHz channel bandwidth and secondly a sample rate reduction by factor 8 from 2.2 Msa/s to 270 kSa/s (selective availability per second) while keeping the resolution at 10 bit. Accordingly at the stage 3 $O_3$ corresponds to:

$$O_3 = \frac{R_3}{r_{Service}} = \frac{270\,KSa/s \cdot 10\,bit/Sample \cdot 2}{12.2\,kbit/s} \approx 443$$

The next stage typically is an adaptive scaling. It reduces the dynamic range to 8 bits and hence, $O_4$ is given by:

$$O_4 = \frac{R_4}{r_{Service}} = \frac{270\,KSa/s \cdot 8\,bit/\,Sample \cdot 2}{12.2\,kbit/s} \approx 354$$

At the equalisers output typically the data rate is around 21 kbit/s and correspondingly

$$O_5 = \frac{R_5}{r_{Service}} = \frac{21\,kbit/s}{12.2\,kbit/s} \approx 1.72.$$

At the output of the decoder the overhead factor is 1, by the aforementioned definition and hence,

$$O_6 = \frac{R_6}{r_{Service}} = \frac{12.2\,kbit/s}{12.2\,kbit/s} = 1\;.$$

The various steps of signal processing may then be described in a diagram such as represented by Fig. 1, that allows for a high level view of how fast the information present to the air interface comes down to the real information carried with the service. It has to be stressed that the benefits of an AGC (Automatic Gain Control) would show up immediately with the invented methodology as the dynamic range is reduced very early in the receive chain. The curve in Fig. 1 would come closer to the value of 1 at an earlier stage.

The methodology described is not restricted to receivers alone, it can also be applied to transmitters e.g. as shown in Fig. 3.

Bearing the above in mind, one of the main characteristics of the diagram according to Fig. 1 are as follows:

a) The transition between analogue and digital is referenced as stage 0 and is reflected in the middle of the diagram. However no overhead factor can be derived for the transition itself. There is only a first overhead factor on the analogue side which is referenced as -1 and a first overhead factor for the digital side referenced as +1. So there is no value to put in the diagram for stage 0.

b) On the left side of the diagram, there are the analogue stages denoted by negative indices for the stages. Here the formula

$$O_i = \frac{C_i}{r_{Service}} = \frac{B \cdot ld(1 + 10^{SNR_{dB}/10})}{r_{Service}}$$

is used.

c) On the right side of the diagram, there are the digital stages denoted by positive indices for the stages. Here the formula

$$O_i = \frac{R_i}{r_{Service}} = \frac{Samplerate \cdot resolution \cdot number\ of\ signal\ streams}{12.2\,kbit/s}$$

is used.

d) One major indicator for the complexity is the value of the diagram around stage 0, where the curve transitions from analogue to digital domain.

## Claims

1. Method of analysing a receiver and/or transmitter chain intended or adapted to be used for a communication system, the method comprising the steps of:

   determining an information overhead factor, defined as the ratio between the respective possible amount of information at a specific stage of a signal processing stage and the bit rate at the output of the receiver chain or at the input of the transmitter chain, at at least one stage.

2. Method of claim 1, further **characterised by** determining the information overhead factor at each stage of the signal processing stage and/or by analysing a receiver and/or transmitter chain intended or adapted to be used for a mobile radio system.

3. Method of any of the preceding claims, further **characterised in that** the steps of determining comprises the steps of defining at an air interface the respective information overhead factor as being infinity, of defining at the input of a transmitter chain the respective information overhead factor as being one and/or of defining at the output of a receiver chain the respective information overhead factor as being one.

4. Method of any of the preceding claims, further **characterised in that** the steps of determining is applied to a digital domain and to an analogue domain of the receiver and/or transmitter chain.

5. Method of any of the preceding claims, further **characterised in that** the steps of determination is based on the Shannon bound criterion at least within an analogue domain of the receiver and/or transmitter chain.

6. Method of any of the preceding claims, further **characterised in that** the bit rate is defined as being the data rate of a given service.

7. Method of any of the preceding claims, further **characterised in that** the respective possible amount of information at a specific stage is calculated on the basis of pre-given characteristics of the respective chain component at said stage.

8. Method of any of the preceding claims, further **characterised in that** the steps of determining the information overhead factor at specific stage is comprising

within an analogue domain the step of calculating a respective capacity C based on the formula

$C = B * ld (1+S/N)$, with B representing a respective bandwidth, ld representing the base two logarithm and S/N representing a respective signal to noise ratio at said stage and/or

within a digital domain the step of calculating a respective information stream R based on the formula $R = S * n_B * n_{sB}$, with S representing a respective sample rate, $n_B$ representing the resolution or number of bits and $n_{SB}$ representing the number of signal branches.

9. Apparatus for analysing a receiver and/or transmitter chain intended or adapted to be used for a communication system, the apparatus comprises a calculator for determining an information overhead factor, defined as the ratio between the respective possible amount of information at a specific stage of a signal processing stage and the bit rate at the output of the receiver chain or at the input of the transmitter chain, at each stage based on pre-given characteristics of the respective chain component at a specific stage.

10. Apparatus of claim 9, further **characterised in that** the receiver and/or transmitter chain is intended or adapted to be used for a mobile radio system.

11. Apparatus of claim 10, further **characterised in that** the mobile radio system is based on a GSM, UMTS or CDMA2000 standard.

12. Data medium with computer readable data stored thereon, wherein the data when read by a computer is interacting with the computer to perform a method of any of the preceding claims.


**Patentansprüche**

1. Verfahren zum Analysieren einer zur Verwendung für ein Kommunikationssystem bestimmten oder geeigneten Empfänger- und/oder Senderkette mit folgenden Schritten:

Bestimmen eines Informations-Kopfteilfaktors, der als das Verhältnis zwischen dem entsprechenden möglichen Betrag an Informationen in einer bestimmten Stufe einer Signalverarbeitungsstufe und der Bitrate am Ausgang der Empfängerkette oder am Eingang der Senderkette definiert wird, in mindestens einer Stufe.

2. Verfahren nach Anspruch 1, weiterhin **gekennzeichnet durch** das Bestimmen des Informations-Kopfteilfaktors in jeder Stufe der Signalverarbeitungsstufe und/oder **durch** Analysieren einer zur Verwendung für ein Mobilfunksystem bestimmten oder geeigneten Empfänger- und/oder Senderkette.

3. Verfahren eines beliebigen der vorhergehenden Ansprüche, weiterhin **dadurch gekennzeichnet, daß** die Schritte des Bestimmens die Schritte des Definierens an einer Luftschnittstelle, daß der entsprechende Informations-Kopfteilfaktor unendlich ist, des Definierens am Eingang einer Senderkette des entsprechenden Informations-Kopfteilfaktors als Eins und/oder des Definierens am Ausgang einer Empfängerkette des entsprechenden Informations-Kopfteilfaktors als Eins umfassen.

4. Verfahren nach einem beliebigen der vorhergehenden Ansprüche, weiterhin **dadurch gekennzeichnet, daß** die Schritte des Bestimmens an einen Digitalbereich und an einen Analogbereich der Empfänger- und/oder Senderkette angewandt werden.

5. Verfahren nach einem beliebigen der vorhergehenden Ansprüche, weiterhin **dadurch gekennzeichnet, daß** die Schritte des Bestimmens auf dem Shannon-Grenzkriterium mindestens innerhalb eines Analogbereichs der Empfänger- und/oder Senderkette beruhen.

6. Verfahren nach einem beliebigen der vorhergehenden Ansprüche, weiterhin **dadurch gekennzeichnet, daß** die Bitrate als die Bitrate eines gegebenen Dienstes definiert wird.

7. Verfahren nach einem beliebigen der vorhergehenden Ansprüche, weiterhin **dadurch gekennzeichnet, daß** der entsprechende mögliche Betrag an Informationen in einer bestimmten Stufe auf Grundlage vorgegebener Eigenschaften der entsprechenden Kettenkomponente in dieser Stufe berechnet wird.

8. Verfahren nach einem beliebigen der vorhergehenden Ansprüche, weiterhin **dadurch gekennzeichnet, daß** die Schritte des Bestimmens des Informations-Kopfteilfaktors in einer bestimmten Stufe folgendes umfassen: innerhalb eines Analogbereichs den Schritt des Berechnens einer entsprechenden Kapazität C auf Grundlage der Formel $C = B * 1d (1+S/N)$, wobei B eine entsprechende Bandbreite, 1d den Logarithmus zur Basis zwei und S/N ein entsprechendes Signal-Rauschverhältnis in dieser Stufe darstellen, und/oder
in einem Digitalbereich den Schritt des Berechnens eines entsprechenden Informationsstroms R auf Grundlage der Formel $R = S * n_B * n_{SB}$, wobei S eine entsprechende Abtastrate, $n_B$ die Auflösung bzw. Bitzahl und $n_{SB}$ die Anzahl von Signalzweigen darstellen.

9. Vorrichtung zum Analysieren einer zur Verwendung für ein Kommunikationssystem bestimmten oder geeigneten Empfänger- und/oder Senderkette, wobei die Vorrichtung einen Rechner zum Bestimmen eines Informations-Kopfteilfaktors umfaßt, der als das Verhältnis zwischen dem entsprechenden möglichen Betrag an Informationen in einer bestimmten Stufe einer Signalverarbeitungsstufe und der Bitrate am Ausgang der Empfängerkette oder am Eingang der Senderkette in jeder Stufe auf Grundlage vorgegebener Eigenschaften der entsprechenden Kettenkomponente in einer bestimmten Stufe definiert wird.

10. Vorrichtung nach Anspruch 9, weiterhin **dadurch gekennzeichnet, daß** die Empfänger- und/oder Senderkette zur Verwendung für ein Mobilfunksystem bestimmt oder geeignet ist.

11. Vorrichtung nach Anspruch 10, weiterhin **dadurch gekennzeichnet, daß** das Mobilfunksystem auf einem GSM-, UMTS- oder CDMA2000-Standard beruht.

12. Datenmittel mit darauf gespeicherten computerlesbaren Daten, wobei die Daten, wenn sie durch einen Computer gelesen werden, mit dem Computer in Wechselwirkung treten, um ein Verfahren nach einem beliebigen der vorhergehenden Ansprüche durchzuführen.

**Revendications**

1. Procédé d'analyse d'une chaîne de réception et/ou d'émission destinée à, ou adaptée pour, être utilisée dans un système de communication, le procédé comprenant les étapes de :

détermination d'un facteur de surdébit d'informations, défini comme le rapport entre la quantité possible respective d'informations à un stade spécifique d'un étage de traitement de signaux et le débit binaire à la sortie de la chaîne de réception ou à l'entrée de la chaîne d'émission, au niveau d'au moins un stade.

**2.** Procédé selon la revendication 1, **caractérisé en outre par** la détermination du facteur de surdébit d'informations au niveau de chaque stade de l'étage de traitement de signaux et/ou en analysant une chaîne de réception et/ou d'émission destinée à, ou adaptée pour, être utilisée dans un système radio mobile.

**3.** Procédé selon l'une quelconque des revendications précédentes, **caractérisé en outre en ce que** l'étape de détermination comprend les étapes de définition au niveau d'une interface radio du facteur de surdébit d'informations respectif comme étant l'infini, de définition à l'entrée d'une chaîne d'émission du facteur de surdébit d'informations respectif comme étant un et/ou de définition à la sortie d'une chaîne de réception du facteur de surdébit d'informations comme étant un.

**4.** Procédé selon l'une quelconque des revendications précédentes, **caractérisé en outre en ce que** l'étape de détermination est appliquée à un domaine numérique et à un domaine analogique de la chaîne de réception et/ou d'émission.

**5.** Procédé selon l'une quelconque des revendications précédentes, **caractérisé en outre en ce que** l'étape de détermination est basée sur le critère des bornes de Shannon au moins au sein d'un domaine analogique de la chaîne de réception et/ou d'émission.

**6.** Procédé selon l'une quelconque des revendications précédentes, **caractérisé en outre en ce que** le débit binaire est défini comme étant le débit de données d'un service donné.

**7.** Procédé selon l'une quelconque des revendications précédentes, **caractérisé en outre en ce que** la quantité possible respective d'informations au niveau d'un stade particulier est calculée sur la base de caractéristiques pré-établies de la composante de chaîne respective au niveau dudit stade.

**8.** Procédé selon l'une quelconque des revendications précédentes, **caractérisé en outre en ce que** l'étape de détermination du facteur de surdébit d'informations à un stade spécifique comprend au sein d'un domaine analogique l'étape de calcul d'une capacité respective C basée sur la formule $C = B * ld (1+S/N)$, B représentant une largeur de bande respective, ld représentant le logarithme base deux et S/N représentant un rapport signal/bruit respectif au niveau dudit stade et/ou au sein d'un domaine numérique l'étape de calcul d'un train d'informations respectif R basé sur la formule $R = S * n_B * n_{sB}$, S représentant une cadence d'échantillonnage respective, $n_B$ représentant la résolution ou le nombre de bits et $n_{SB}$ représentant le nombre de branchements de signal.

**9.** Appareil pour analyser une chaîne de réception et/ou d'émission destinée à, ou adaptée pour, être utilisée dans un système de communication, l'appareil comprenant un calculateur pour déterminer un facteur de surdébit d'informations, défini comme le rapport entre la quantité possible respective d'informations à un stade spécifique d'un étage de traitement de signaux et le débit binaire à la sortie de la chaîne de réception ou à l'entrée de la chaîne d'émission, au niveau de chaque stade basé sur des caractéristiques pré-établies de la composante de chaîne respective au niveau d'un stade spécifique.

**10.** Appareil selon la revendication 9, **caractérisé en outre en ce que** chaîne de réception et/ou d'émission est destinée à, ou adaptée pour, être utilisée dans un système radio mobile.

**11.** Appareil selon la revendication 10, **caractérisé en outre en ce que** le système radio mobile est basé sur une norme GSM, UMTS ou CDMA2000.

**12.** Support de données sur lequel sont mémorisées des données lisibles par ordinateur, dans lequel les données lorsqu'elles sont lues par un ordinateur interagissent avec l'ordinateur pour exécuter un procédé selon l'une quelconque des revendications précédentes.

## Fig. 1

## Fig. 2

# Fig. 3

# Fig. 4